Europäisches Patentamt

European Patent Office

Office européen des brevets

(11) Veröffentlichungsnummer: **0 081 661**
**A2**

# EUROPÄISCHE PATENTANMELDUNG

(21) Anmeldenummer: 82109841.5

(22) Anmeldetag: 25.10.82

(51) Int. Cl.³: **H 02 H 3/16,** H 02 H 3/24

(30) Priorität: 27.10.81 DE 3142575

(43) Veröffentlichungstag der Anmeldung: **22.06.83**
**Patentblatt 83/25**

(84) Benannte Vertragsstaaten: **AT CH DE FR GB IT LI NL SE**

(71) Anmelder: **Lauerer, Friedrich, Karwendelstrasse 12a,**
**D-8033 Krailling (DE)**

(72) Erfinder: **Lauerer, Friedrich, Karwendelstrasse 12a,**
**D-8033 Krailling (DE)**

(54) Fehlerstromschutzeinrichtung.

(57) Die Fehlerstromschutzeinrichtung geht von einer Schutzschaltung aus, bei der das Vorhandensein der Netzspannung die Voraussetzung für die erwartete Schutzwirkung im Fehlerfalle (Übertragung einer Berührungsspannung) ist. Der Nachteil der bekannten Schutzeinrichtungen (z.B. Fehlerstromschutzschalter mit Verstärkern), daß bei Unterbrechung des Mittelleiters im Fehlerfalle keine Abschaltung erfolgt und deshalb die gefährliche Berührungsspannung bestehenbleibt, wird erfindungsgemäß dadurch behoben, daß die zum Verbrauchsgerät führenden Leitungen (2 und 3) selbsttätig nur dann zugeschaltet werden, wenn die Netzspannung voll anliegt. Diese Durchschaltung kann z.B. mittels zwei Triacs (5 und 6) erfolgen. An einem Spannungsteiler (7, 8 und 9) entsteht nur dann die zum Durchschalten nötige Zündspannung, wenn die Netzspannung anliegt und in der Zuleitung keine Unterbrechung vorliegt.

## Fehlerstromschutzeinrichtung

Die bekannten Fehlerstrom-Schutzschalter können in zwei Arten eingeteilt werden, in solche welche ohne und solche, welche mit Hilfe der Netzspannung funktionieren.

Jene Schutzschalter, welche ohne Netzspannung funktionieren, haben den Nachteil, daß ihre Ausfallrate relativ hoch ist. Sie liegt bei 3 %. Die Ursache liegt in der geringen Energie, die zur Auslösung des Schaltschlosses zur Verfügung steht.

Jene Schutzschalter, welche nur bei Vorhandensein der Netzspannung funktionieren haben den Nachteil, daß die Berührungsgefahr weiter bestehen bleibt, wenn in der Zuleitung, insbesondere im Mittelleiter eine Unterbrechung vorhanden ist.

Es ist Aufgabe der Erfindung, diesen Nachteil zu beseitigen. Die Erfindung ist dadurch gekennzeichnet, daß die zur Verbraucheranlage bzw. zum Verbrauchsgerät führenden Leitungen selbsttätig nur dann zugeschaltet werden, wenn zwischen den durch die Einrichtung führenden Leitungen, gegebenenfalls unter Einbeziehung des Schutzleiters, die Netzspannung liegt.

Durch die in den Unteransprüchen angeführten weiteren Erfindungsgedanken bzw. Maßnahmen wird eine vorteilhafte Weiterentwicklung und Verbesserung des im Hauptanspruch angegebenen Erfindungsgedankens möglich.

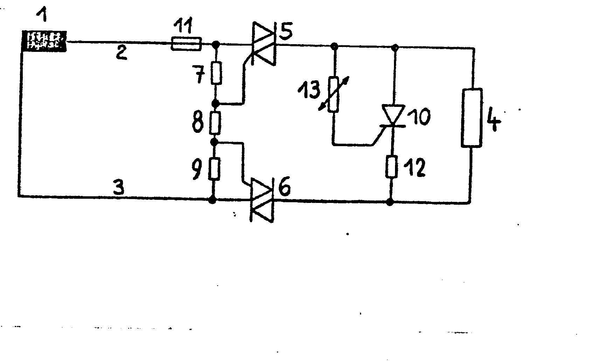

Ein Ausführungsbeispiel ist in der Zeichnung wiedergegeben. Der Netztransformator 1 speist über den Außenleiter 2 und den Mittelleiter 3 den Verbraucher 4. In jedem Leiter liegt ein Triac 5 und 6. Durch den Spannungsteiler 7, 8 und 9 wird bei Vorhandensein der Netzspannung jeder Triac gezündet, wodurch beim Verbraucher 4 die Versorgungsspannung bereitgestellt wird. Erfährt z. B. der Mittelleiter 3 im Bereich Netztrafo bis Triac eine Unterbrechung, so kann keiner der beiden Triacs durchschalten, d.h. in der Verbraucheranlage bzw. im Verbrauchsgerät existiert keine Spannung gegen Erde und damit ist auch jede Berührungsgefahr ausgeschlossen.

Die Abschaltung im Fehlerfalle erfolgt hier durch den Thyristor (10), z.B. dadurch, daß Wasser in das Verbrauchsgerät (Haartrockner, Heizlüfter usw. ) dringt (z.B. dadurch, daß das Verbrauchsgerät in die mit Wasser gefüllte Badewanne fällt) und die Thyristoranschlüsse überbrückt. Dies hat zur Folge, daß der Thyristor gezündet wird und ein Kurzschluß erzeugt wird, der die vorgeschaltete Sicherung 11 zur Abschaltung bringt.

Der Thyristor kann zusätzlich bei Übertemperatur (z.B. im Haartrockner, Heizlüfter usw) gezündet werden. Dies erfolgt durch einem im Verbrauchsgerät eingebauten Heißleiter 13, der zwischen Anode und Gitter geschaltet ist.

Ein Schutz ist auch dann gegeben, wenn die Sicherung 11 im Mittelleiter 3 liegt, was beim Anschluß über eine Steckvorrichtung der Fall sein kann, wenn die Sicherung 11 in der Steckvorrichtung eingebaut ist.

Aus den oben erwähnten Gründen ist ein Schutz auch bei allen Netzarten gegeben, insbesondere auch bei solchen zweipoligen Anschlüssen, bei denen zwei Außenleiter zur Speisung des Verbrauchsgerätes dienen, d.h. bei 3 x 220 V, bei 127/220 V und bei 110/190 V. Durch geeignete Dimensionierung der Sicherung 11 und der Widerstände 7, 8, 9 und 12 kann ein zuverlässiger Schutz bei jedem möglichen Wert der Netz-Innenimpedanz erzielt werden. Zur Vermeidung von Wärmeverlusten können statt der Widerstände 7, 8 und 9 auch Kondensatoren verwendet werden.

Der Thyristor 10 kann mit der übrigen Einrichtung eine Einheit bilden und z.B. auch über einen Summenstromwandler gezündet werden, wobei die Funktion der Sicherung 11 entfallen würde.

Eine besonders vorteilhafte Anwendung ergibt sich dadurch, daß alle oder ein Teil der Bauelement in einem Stecker untergebracht sind, wobei als Sicherung 11 ein elektromagnetischer Schnellauslöser dient, der ebenfalls im Stecker untergebracht ist.

Dipl.-Ing. Friedrich Lauerer  
Ohmstraße 11, 8000 München 40

München, am 27.10.1981  
LPa37   0081661

## Fehlerstromschutzeinrichtung

### Patentansprüche

1. Fehlerstromschutzeinrichtung, bei der die Abschaltung im Fehlerfalle vom Vorhandensein der Netzspannung abhängig ist, dadurch gekennzeichnet, daß die zur Verbraucheranlage bzw. zum Verbrauchsgerät führenden Leitungen selbsttätig nur dann zugeschaltet werden, wenn zwischen den durch die Einrichtung führenden Leitungen, gegebenenfalls unter Einbeziehung des Schutzleiters, die Netzspannung liegt.

2. Einrichtung nach Anspruch 1, dadurch gekennzeichnet, daß in jeder Leitung ein Schalter liegt, der nur bei Anliegen der Netzspannung einschaltet.

3. Einrichtung nach Anspruch 2, dadurch gekennzeichnet, daß als Schalter ein Schütz oder ein Triac (5 und 6) verwendet wird.

4. Einrichtung nach einem der vorhergehenden Ansprüche, dadurch gekennzeichnet, daß die Einrichtung einem Fehlerstrom-Schutzschalter vor- oder nachgeschaltet wird und mit ihm eine bauliche Einheit bildet.

5. Einrichtung nach einem der vorhergehenden Ansprüche, dadurch gekennzeichnet, daß im Fehlerstrom-Schutzschalter nach dem Summenstromwandler oder im Verbrauchsgerät ein Kurzschluß-schalter (10) liegt, der im Fehlerfalle einen Kurzschluß erzeugt und so die vorgeschaltete Sicherung (11) zur Abschaltung bringt.

6. Einrichtung nach Anspruch 5, dadurch gekennzeichnet, daß der Kurzschlußschalter auf Feuchtigkeit oder/und Übertemperatur anspricht.

7. Einrichtung nach Anspruch 6, dadurch gekennzeichnet, daß als Kurzschlußschalter ein Halbleiter (Thyristor, Triac, Transistor usw.) oder ein Reedkontaktschalter verwendet wird.

8. Einrichtung nach einem der vorhergehenden Ansprüche, dadurch gekennzeichnet, daß alle oder ein Teil der Bauelemente in einem Stecker untergebracht sind.